# EUROPÄISCHE PATENTANMELDUNG

(11) **EP 0 936 397 A1**
(43) Veröffentlichungstag der Anmeldung: **18.08.1999**
(21) Anmeldenummer: 99100954.9
(22) Anmeldetag: 20.01.1999
(51) Int. Cl.: F16M 13/00

(54) **Geräteaufsteller für ein flaches Gerät**

(30) Priorität: 13.02.1998 DE 29802501 U
(71) Anmelder: Siemens Nixdorf Retail and Banking Systems GmbH, 33106 Paderborn (DE)
(72) Erfinder: Kruse, Bernd, 33184 Buke (DE)
(74) Vertreter: Epping, Wilhelm, Dr.-Ing.

(57) **Zusammenfassung**

Geräteaufsteller für ein flaches Gerät (10), der einen länglichen prismatischen Grundkörper (14) mit einem axialen Schlitz (18) und mindestens zwei radial abstehende Stützstäbe (15) aufweist.

## Beschreibung

Die Erfindung betrifft einen Geräteaufsteller für ein flaches Gerät.

Flache Geräte mit einer als verwindungssteifer Trägerplatte ausgeführten Frontseite und einer einsehbaren Rückseite können bei geeigneter Aufstellung als Tischgeräte betrieben werden.

Aufgabe der Erfindung ist es daher, einen geeigneten, leicht zu fertigenden und formschönen Aufsteller anzugeben.

Die Erfindung besteht aus einem Geräteaufsteller für ein flaches Gerät, der einen länglichen prismatischen Grundkörper mit einem axialen Schlitz und mindestens zwei radial abstehende Stützstäbe aufweist.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

Es zeigen
- Fig. 1: eine seitliche Ansicht eines mit einem Geräteaufsteller aufgestellten flachen Geräts,
- Fig. 2: eine Rückansicht des Grundkörpers des Geräteaufstellers.

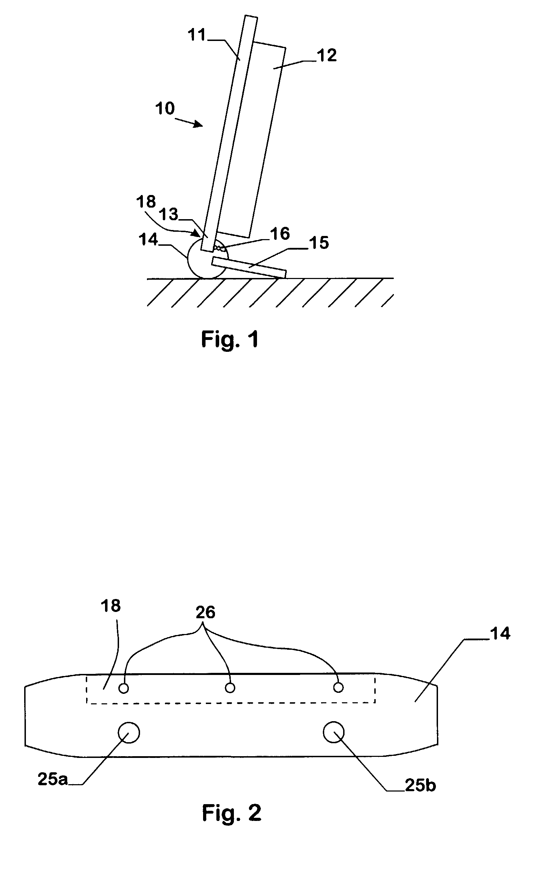

In Fig. 1 ist ein flaches Gerät 10 gezeigt, welches aus einer verwindungssteifen Frontplatte 11 und einem daran befestigten Gehäuse 12 besteht. Eine Kante 13, hier die Unterkante, ist so ausreichend stabil ausgeführt, daß das Gerät an dieser Kante 13 aufgestellt werden kann.

Hierzu wird ein Geräteaufsteller verwendet, welcher aus einem länglichen, prismatischen, vorzugsweise mit kreisrundem Querschnitt aufgeführten Grundkörper 14 besteht. In diesen ist entlang der Achse des Grundkörpers 14 ein Schlitz 18 vorgesehen, in den die Kante 13 des aufzustellenden Geräts 10 eingelassen werden kann. Das eingelassene Gerät 10 ist mit Madenschrauben 16 gesichert, die von der im Betrieb nicht sichtbaren Seite angeordnet sind.

Axial sind in dem Grundkörper 14 Bohrungen 25a und 25b vorgesehen, in die die Enden zweier Stützstäbe 15 eingelassen und befestigt sind, z.B. durch ein Gewinde oder eine Klebung. Die Achsen der Bohrungen 25a und 25b sind untereinander parallel, senkrecht zu der Achse des Grundkörpers 14 und in etwa senkrecht zu der durch den Schlitz 18 bestimmten Ebene, in der sich die Frontplatte des aufzustellenden Geräts befindet.

Der letztere Winkel kann genau 90° betragen, wenn die Stützstäbe 15 so kurz sind, daß im aufgestellen Zustand die Frontplatte 11 des aufgestellten Geräts leicht nach hinten geneigt ist. Zur Verbesserung der Sichtbarkeit und Standfestigkeit kann der Winkel auch etwas geringer als 90° ausgeführt werden.

## Patentansprüche

1. Geräteaufsteller für ein flaches Gerät (10), das eine an mindestens einer Kante (13) über ein Gehäuse überragende verwindungssteife Frontplatte (11) hat,
**dadurch gekennzeichnet,**
daß er einen länglichen, im wesentlichen prismatischen Grundkörper (14) umfaßt, in dem ein sich axial erstreckender Schlitz (18) vorgesehen ist, in den eine Kante (13) der aufzustellenden Anzeigeeinheit einlaßbar ist, und
daß radial mindestens zwei Stützstäbe (15) mit dem Grundkörper (14) verbunden sind, die mit der durch den Schlitz (18) bestimmten Ebene einen Winkel von etwa 90 Grad bilden.

2. Geräteaufsteller nach Anspruch 1, wobei der Grundkörper (14) und die Stützstäbe (15) im wesentlichen kreisrunden Querschnitt haben.

3. Geräteaufsteller nach Anspruch 1 oder 2, wobei die in den Schlitz (18) eingelassene Kante (13) der Frontplatte (11) durch mindestens eine Madenschraube (16) gesichert wird.
